# FASCICULE DE BREVET EUROPEEN

(11) **EP 2 946 350 B1**
(45) Date de publication et mention de la délivrance du brevet: **29.08.2018**
(21) Numéro de dépôt: 14700703.3
(22) Date de dépôt: 16.01.2014
(51) Int. Cl.: G06Q 30/06, G06Q 10/08, G06Q 50/28, G07F 11/54, G07F 17/12, G07F 9/10

(54) **PLATEFORME DE COMMERCE ELECTRONIQUE**
ELEKTRONISCHE HANDELSPLATTFORM
ELECTRONIC COMMERCE PLATFORM

(30) Priorité: 16.01.2013 FR 1350356; 20.08.2013 FR 1358079
(43) Date de publication de la demande: 25.11.2015
(73) Titulaire: Globe Interfin S.A., 2086 Luxembourg (LU)
(72) Inventeur: CREBIER, Gérard, F-13630 Eyragues (FR)
(74) Mandataire: IP Trust
(86) Numéro de dépôt international: PCT/EP2014/050831
(87) Numéro de publication internationale: WO 2014/111483

(56) Documents cités:
- EP-A2- 1 076 213
- EP-A2- 1 255 233
- WO-A1-01/12922
- WO-A1-2004/114234
- DE-A1-102006 025 876
- DE-U1-202006 003 054
- JP-A- 2002 029 616
- US-A1- 2005 060 063

## Description

### Domaine de l'invention

La présente invention concerne le domaine des infrastructures de vente d'article en ligne, et plus précisément les procédés et équipements permettant à un consommateur de passer une commande en ligne et de récupérer les articles commandés dans un équipement de mise à disposition accessible de manière sécurisée par le vendeur d'une part et l'acheteur d'autre part.

### Etat de la technique

On connaît dans l'état de la technique différents systèmes permettant de passer une commande en ligne et de récupérer le bien sur un site dédié.

En particulier, la demande de brevet japonais JP2002029616 décrit un système de livraison de marchandises permettant à un consommateur de recevoir une cargaison par des procédures simples à un endroit désiré sans se soucier du temps. Ce système de livraison de marchandises est constitué de dispositifs de stockage fixe installés en plusieurs endroits et de dispositifs de gestion de système reliés à ces dispositifs de stockage par l'intermédiaire d'un réseau de communication. Le dispositif de stockage est pourvu d'une pluralité d'étagères ayant une porte verrouillée et déverrouillée par un mécanisme de verrouillage et un contrôleur dans lequel un panneau de commande 11a ayant un clavier 116 est prévu. L'étagère spécifiée par le dispositif de gestion de système est déverrouillée en introduisant le numéro d'identification du livreur par un livreur D apportant la marchandise avec lui et en introduisant le numéro de code par une personne de commande C.

On connaît aussi dans l'art antérieur la demande de brevet internationale WO0112922 décrivant un système de fourniture temporaire de différents services, tels que services dentaires, services postaux, services de santé et de santé, services de bibliothèque, théâtres, banques, services d'assurance, services de vente au détail, services d'information, services éducatifs, unités mobiles qui sont destinées à des types de services respectifs et qui visitent le lieu géographique temporairement. Situé à l'endroit géographique concerné est un bâtiment terminal qui a des pièces d'amarrage de l'unité mobile. Le terminal comprend des espaces de service et d'hébergement tels que toilettes, salles d'attente des clients, salles de réception, locaux d'hébergement pour les spécialistes / personnel appartenant aux unités respectives, de sorte que les unités mobiles ne doivent pas fournir ces espaces, mais peuvent être utilisés. sage pour un service à fournir. Le terminal peut être un bâtiment permanent ou un bâtiment mobile.

La demande de brevet allemande DE202006003054 décrit une remorque présentant 1 à 4 essieux avec des roues, une barre de remorquage, un plancher, un toit, éventuellement d'autres composants et plusieurs parois latérales. Plusieurs compartiments pouvant être fermés de l'extérieur sont disposés dans au moins l'une des parois latérales. La remorque peut alternativement avoir 1 ou 2 essieux avec des roues. Au moins une paroi latérale peut comporter entre 2 et 200 compartiments.

On connaît encore dans l'état de la technique la demande de brevet internationale WO2004114234, les demandes de brevet européen EP1076213 et EP1255233, la demande de brevet américaine US2005060063 et la demande de brevet allemande DE102006025876.

### Inconvénients des solutions de l'art antérieur

Les systèmes de l'art antérieur ne sont pas totalement satisfaisants.

Les solutions connues impliquent l'utilisation d'équipements encombrant, afin de permettre la mise à disposition d'articles de tailles variables, imposant de dimensionner les casiers en fonction du plus grand des articles à délivrer.

Par ailleurs, si certains articles nécessitent un maintien à température réfrigéré, l'ensemble de l'équipement est réfrigéré, ce qui occasionne des coûts de fonctionnement élevés.

Une variante préférée de l'invention concerne un système optimisé de logistique.

Afin d'optimiser le regroupement et la préparation des commandes et de réduire les coûts logistiques, il est souhaitable de massifier ces opérations en les centralisant pour le plus grand nombre de commandes et donc d'utilisateurs.

Toutefois, cela oblige de recourir à un grand nombre d'opérations de livraison, coûteuses et ne donnant pas toujours satisfaction au client qui doit être disponible au moment de la livraison de la commande.

Les solutions mettant en oeuvre des consignes automatiques nécessitent de réaliser une partie des opérations de préparation de commande non pas dans un centre de logistique spécifique, mais sur le site de la consigne, généralement par des opérations manuelles fastidieuses et pouvant occasionner des erreurs de répartition des articles destinés au site considéré.

La solution de dépôt de la commande dans un point de stockage temporaire implique également un surcout et une complication de la chaîne logistique.

### Solutions apportée par l'invention

Afin de remédier à ces inconvénients, la présente invention concerne un système de commerce électronique conforme à la revendication 1 et optionnellement à une ou plusieurs revendications dépendantes, prise(s) isolément ou en combinaison.

### Description détaillée d'un mode de réalisation non limitatif

La présente invention sera mieux comprise à la lecture de la description qui suit, se référant à un exemple non limitatif de réalisation, illustré par les dessins annexés où :
- la figure 1 représente une vue d'un exemple d'un kiosque
- la figure 2 représente une vue en coupe d'un kiosque
- la figure 3 représente une vue schématique d'une remorque selon l'invention
- la figure 4 représente une vue schématique d'une remorque selon l'invention
- la figure 5 représente une vue intérieure d'une remorque selon l'invention

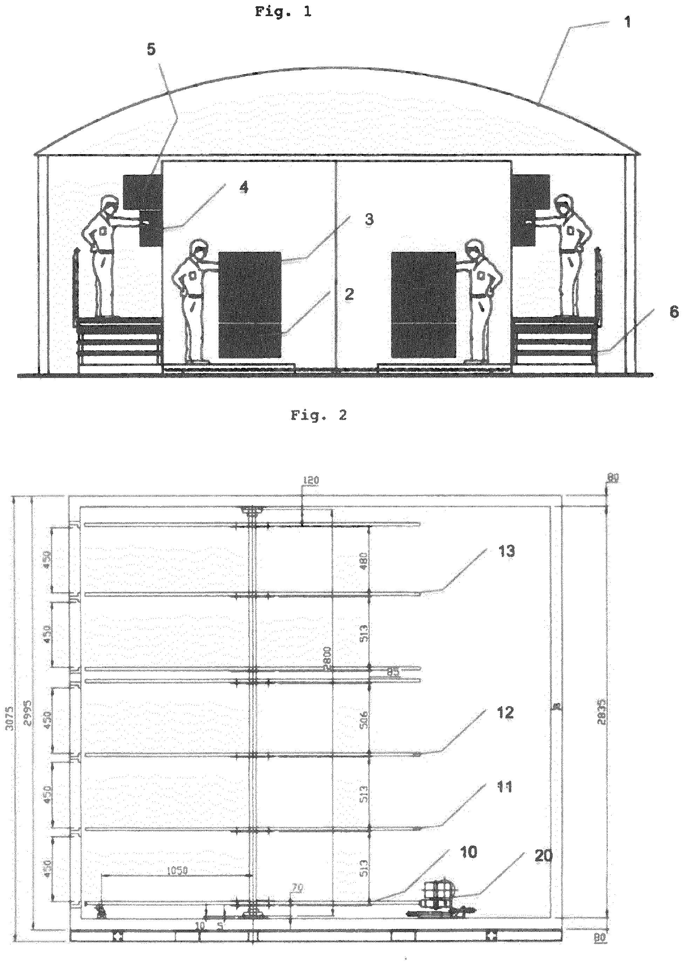

Il est précisé que l'exemple de réalisation concernant un kiosque illustré par les figures 1 et 2 est explicité simplement pour la compréhension du contexte de l'invention, mais ne fait pas partie de l'invention, qui est limité à un système mettant en oeuvre une remorque mobile décrite ci-après.

Ce kiosque est constitué par une construction immobilière destinée à servir d'abri.

Cette construction (1) présente plusieurs emplacements permettant à un client ou un livreur d'accéder aux articles rangés à l'intérieur. Une première série de guichets (2, 3) permet d'accéder aux articles les plus encombrants, conservés dans des zones à température ambiante ou à une température peu refroidie, par exemple de l'ordre de 12°C.

Une série de marches (6) permet d'accéder aux guichets (4, 5) correspondant aux compartiments thermorégulés dans lesquels sont stockés les articles moins encombrants, notamment les produits surgelés et les produits frais.

La figure 2 représente une vue en coupe d'un tel kiosque.

Ce kiosque comporte une série de plateaux (10 à 13) surmontés par des cloisons de séparation formant les compartiments destinés à recevoir transitoirement les articles.

Un moteur (20) entrainent les plateaux en rotation afin de présenter le compartiment à charger ou décharger en face du guichet, en fonction des instructions délivrés par un calculateur recevant les informations provenant d'un lecteur de code.

### Passation d'une commande électronique

La première étape consiste à passer une commande à partir d'un site marchand de type connu.

A cet effet, le client prépare sa commande par Internet sur le site marchand de l'enseigne et choisit la livraison dans l'un des kiosques desservi. La sélection se fait à partir d'un logiciel cartographique assistant l'internaute dans l'identification du kiosque le plus proche du lieu souhaité, et optionnellement calculant l'itinéraire et le temps de déplacement.

Pendant la prise de commande, un échange informatique a lieu entre le site marchand de l'enseigne et les serveurs de gestion des kiosques de mise à disposition des articles, afin de s'assurer de disponibilité suffisante dans le kiosque désiré (un casier par température et un taux d'occupation du kiosque inférieur à 90% car à ce stade le volume du panier n'est pas connu).

L'internaute poursuit la commande et remplis son panier virtuel, le valide et règle sa commande comme pour une commande électronique habituelle. Un courrier électronique de confirmation de commande est adressé par le serveur de l'enseigne.

### Préparation de la commande physique

Lorsque la commande électronique est validée, le marchand prépare la commande et la conditionne en sacs et/ou cartons.

Un nouvel échange informatique a lieu entre le site marchand de l'enseigne et les serveurs de gestion des kiosques afin d'éditer les étiquettes à positionner sur chaque colis ou sac. Chaque étiquette possède un matricielle de type QR-CODE et un code couleur indiquant la température de conservation.

A ce stade le volume exact de la commande est connu, les casiers excédentaires précédemment réservés sont libérés ou des supplémentaires bloqués.

Le marchand procède ensuite à l'impression des étiquettes, les colis sont prêts à être déposés dans le kiosque à température dirigée. Les étiquettes sont fournies par le serveur de gestion de kiosques sous la forme de planche A4 au format PDF et imprimables sur n'importe qu'elle imprimante.

Lorsque la préparation de la commande est achevée, le serveur envoie un nouveau courrier électronique au client, indiquant que sa commande a été préparée par l'enseigne et est en attente de dépôt en kiosque.

### Livraison de la commande physique vers le kiosque

Un camion frigorifique récupère toutes les commandes de cette enseigne à destination d'un ou plusieurs kiosque. Les circuit d'acheminement sont ainsi optimisés pour réduire les circuits de livraison et mutualiser les articles selon un modèle NxM, c'est-à-dire organisant l'acheminement depuis une pluralité de N centres de préparation de commande vers une pluralité de M kiosques.

A son arrivée au kiosque correspondant à un ou plusieurs articles, le livreur passe l'étiquette de chaque colis ou sac muni de son QrCode, dans n'importe quel ordre y compris en mélangeant les commandes. Le kiosque positionne le casier et ouvre la porte correspondante à cette commande. Le livreur peut ainsi optimiser son dépôt en présentant les colis par température de conservation.

Le kiosque commande le déplacement et l'ouverture de chacun des casiers, afin de permettre la dépose des articles dans le casier correspondant à la température de conservation requise. La vérification des articles est réalisée à partir du code matriciel déposé sur chaque des lots, à l'aide d'un capteur prévu sur chaque poste.

Lorsque tous les articles d'une commande sont déposés dans le kiosque correspondant, le serveur adresse un courrier électronique de confirmation de mise à disposition. Le client peut dès cet instant venir retirer ses colis. En parallèle un SMS est envoyé si le client a donné son numéro de mobile. Le courrier électronique contient un QrCode qui identifie la commande du client. Le SMS contient un code de retrait. Le client peut utiliser indifféremment l'un ou l'autre.

### Retrait de la commande

Le client se rend auprès du kiosque qu'il avait sélectionné et qui est rappelé sur les messages de confirmation. Il présente à un lecteur soit le code matriciel, soit le code envoyé par SMS.

L'écran d'affichage indique alors la ou les portes à ouvrir pour retirer les articles de la commande.

### Remorque mobile selon l'invention

L'invention est limitée, comme précédemment indiqué, à un système comportant une remarque mobile.

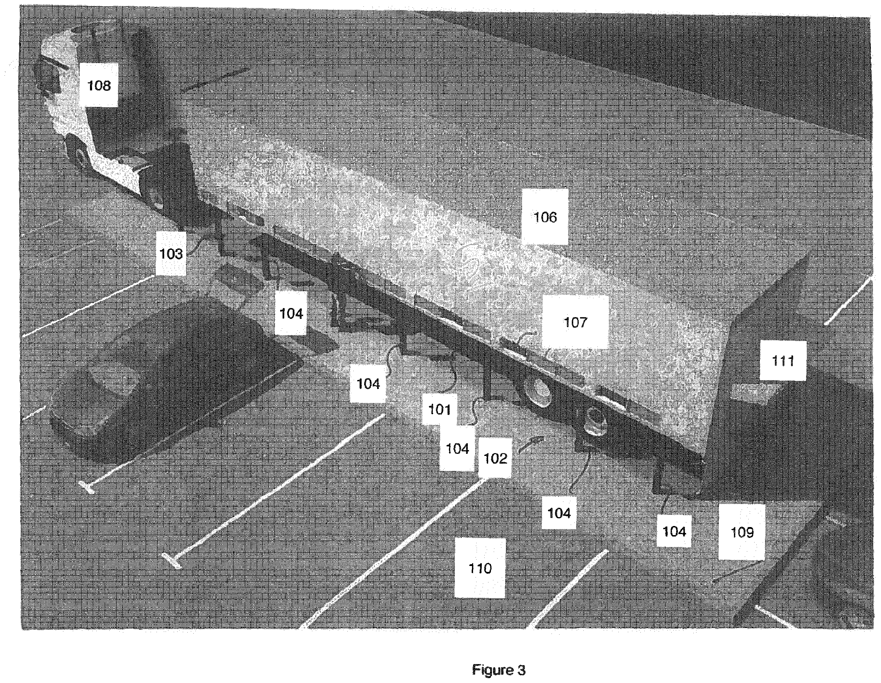

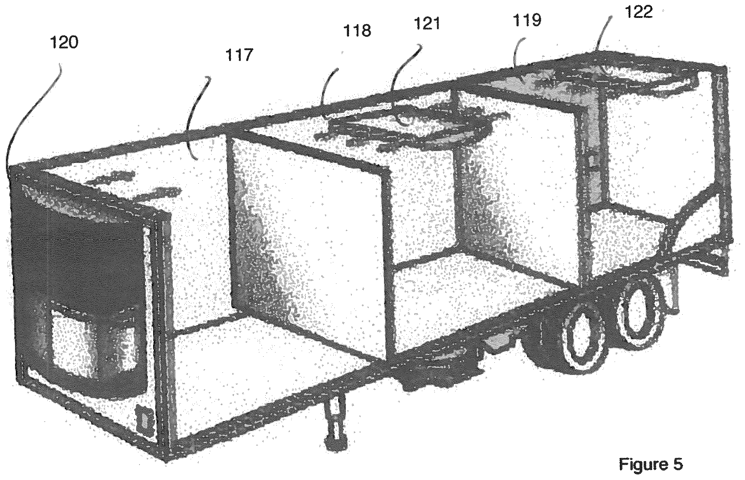

Les figures 3 à 5 représentent des vues d'une remorque selon une variante avantageuse de l'invention.

Elle est constituée par un châssis comportant de manière connue deux longerons (101) sur lesquels sont prévus, à l'arrière, un train roulant (102) et à l'avant une béquille (103).

Des béquilles latérales complémentaires (104) sont prévues pour améliorer la stabilité au repos.

Le châssis présente à l'avant un pivot d'assemblage et des raccordements électriques et pneumatiques ou hydrauliques pour le raccordement avec le véhicule tracteur en mode de déplacement routier.

Des parois latérales (105) et un toit (106) forment une enceinte close.

Cette paroi présente dans une série de trappes (107) présentant chacune une ouverture d'environ 40 x 60 centimètres, et disposés à une hauteur d'environ 80 à 120 centimètres en le bas de la trappe et le sol.

La remorque est chargée dans un centre logistique de préparation de commandes. La remorque est disposée près d'un quai de chargement, conformément à l'organisation des centres logistiques.

Une fois que la remorque est chargée, elle est transportée à l'aide d'un tracteur (109) périphérique. Cette zone est elle-même entourée par une zone de stationnement (110) pour les véhicules des clients venant récupérer leur commande.

L'arrière de la remorque comporte un auvent (111) abritant un équipement pour la saisie du code de l'utilisateur. Cet équipement comporte un lecteur optique de code matriciel (QRcode par exemple ou code à barre) et éventuellement un clavier pour la saisie d'un code textuel, voire un lecteur à courte distance de type NFC, ainsi qu'un afficheur pour la présentation des instructions telles que la désignation de la trappe de récupération, et les modalités pour ouvrir la trappe.

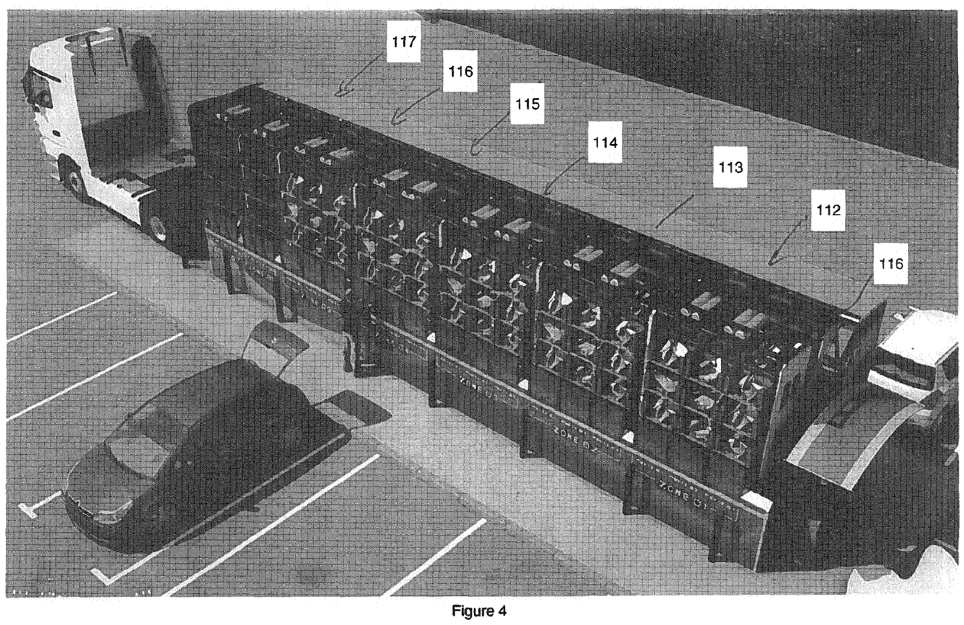

La figure 4 représente une vue éclatée de la remorque. Elle présente des blocs (112 à 115) présentant chacun trois lignes de compartiments cloisonnés (116), ouverts sur l'avant. Dans l'exemple décrit, la remorque comporte 516 compartiments permettant donc autant de livraisons distinctes.

Chaque ligne est organisée pour permettre un défilement des compartiments afin de présenter celui correspondant au code présenté par le client en face de la trappe correspondante.

Certains blocs sont situés dans des zones réfrigérées. La figure 3 représente un exemple de remorque comportant à sa partie avant un bloc frigorifique (117) de basse température. Les seconds et troisième compartiments respectivement (118 et 119) sont maintenus à des températures différentes à l'aide de groupe de thermorégulation (121, 122) ou de ventilation. La remorque permet ainsi de stocker dans des conditions optimales des produits respectivement congelés, frais et secs.

La remorque comporte une source d'énergie autonome, par exemple des batteries, un groupe électrogène et des cellules photovoltaïques.

## Revendications

1. Système de commerce électronique comprenant :
- une plateforme de commerce électronique pour la consultation des articles et la préparation d'une commande à partir d'un ordinateur relié au serveur de ladite plateforme par un réseau informatique,
- au moins un équipement de mise à disposition d'une commande constitué par une remorque mobile de livraison d'articles, comprenant au moins une enceinte munie d'un guichet définissant une trappe d'accès s'ouvrant sur la paroi latérale de la remorque, commandé par ordinateur local et des moyens de dialogue avec un lecteur de code,
ladite remorque comprenant plusieurs compartiments mobiles aptes à être positionnés en face de la trappe d'accès du guichet pour permettre le retrait et/ou l'introduction des articles dans ledit compartiment,
le système comportant en outre des moyens pour permettre l'enregistrement d'un code correspondant au compartiment dans lequel les articles d'une commande sont déposés, la transmission sécurisée dudit code à l'usager qui a passé ladite commande sous forme d'une notification électronique et des moyens pour permettre audit usager de présenter ledit code pour activer le déplacement du compartiment considéré en regard de la trappe d'accès et l'ouverture de celle-ci pour le retrait des articles correspondant à la commande, ces moyens comprenant un équipement pour la saisie d'un code disposé à l'arrière de la remorque et abrité par un auvent (111).

2. Système de commerce électronique selon la revendication 1, **caractérisé en ce que** lesdits équipements de mise à disposition d'une commande comportent au moins deux zones de stockage thermo-régulées à des températures distinctes.

3. Système de commerce électronique selon la revendication 1 ou la revendication 2, **caractérisé en ce que** lesdits équipements de mise à disposition des articles comporte au moins un lecteur d'un code et un calculateur commandant le déplacement des compartiments et du déverrouillage du guichet, ainsi qu'un afficheur indiquant en fonction du code les guichets à ouvrir.

4. Système de commerce électronique selon l'une quelconque des revendications précédentes, **caractérisé en ce qu'**il comporte une pluralité d'équipements de mise à disposition et **en ce qu'**il comporte des moyens d'édition d'étiquettes pour identifier les lots d'une même commande et destinée à des compartiments distincts d'un même équipement de mise à disposition.

5. Système de commerce électronique selon la revendication 1, **caractérisé en ce que** ladite remorque de livraison d'articles comporte une pluralité de séries de compartiments, alignées longitudinalement et communiquant chacune avec une trappe s'ouvrant sur la paroi latérale de ladite remorque, au moins une zone réfrigérée et un lecteur de code associé à un calculateur commandant la comparaison du code présenté par un utilisateur avec une mémoire comportant les codes calculés par le centre de regroupement, ainsi que l'identifiant du compartiment associé, ledit calculateur commandant le déplacement desdits compartiments et le déverrouillage de la correspondante, le lecteur de code étant abrité à l'arrière de la remorque par un auvent (111).

6. Système de commerce électronique selon la revendication précédente, **caractérisée en ce que** ladite remorque de livraison d'articles comporte au moins une zone réfrigérée et une zone à une température ambiante.

7. Système de commerce électronique selon l'une des deux revendications précédentes, **caractérisée en ce que** ladite remorque de livraison d'articles comporte une source d'énergie autonome.

## Patentansprüche

1. Elektronisches Handelssystem bestehend aus:
- einer elektronischen Handelsplattform zum Einsehen von Artikeln und zur Kommissionierung einer Bestellung mithilfe eines Computers, der über ein Informatiknetzwerk mit einem Server der besagten Plattform verbunden ist,
- mindestens einer Vorrichtung zur Bereitstellung einer zusammengestellten Bestellung über einen mobilen Anhänger zur Auslieferung von Artikeln, welche mindestens eine Umschließung mit einem Schalter enthält, welche eine zur Seitenwand des Anhängers hin öffnende Zugangsklappe abgrenzt, wobei die Vorrichtung über einen lokalen Computer und Dialogmittel mit dem Code-Lesegerät gesteuert wird,
wobei besagter Anhänger mehrere mobile Fächer aufweist, die vor der Zugangsklappe des Schalters positioniert werden können, um die Artikel aus besagten Fach zu entnehmen und/oder hinein zu legen,
wobei das System des weiteren Mittel zur Registrierung eines Codes für das Fach, in dem die Artikel einer Bestellung abgelegt werden, enthält, wobei die gesicherte Übermittlung des Codes des Benutzers, welcher besagte Bestellung aufgegeben hat, in Form einer elektronischen Mitteilung und Mitteln erfolgt, die dem Benutzer die Möglichkeit geben, besagten Code zur Aktivierung der Verschiebung des betreffenden Faches vor die Zugangsklappe sowie zum Öffnen desselben zwecks Entnahme der Bestellartikel anzugeben, wobei diese Mittel eine Vorrichtung zur Erfassung eines Codes umfassen, welche sich hinter dem Anhänger befindet und mit einer Überdachung (111) geschützt wird.

2. Elektronisches Handelssystem nach Anspruch 1, **dadurch gekennzeichnet, dass** besagte Vorrichtungen zur Bereitstellung einer Bestellung mindestens zwei wärmeregulierte Lagerbereiche mit unterschiedlichen Temperaturen aufweisen.

3. Elektronisches Handelssystem nach Anspruch 1 oder Anspruch 2, **dadurch gekennzeichnet, dass** besagte Vorrichtungen zur Bereitstellung der Artikel mindestens ein Code-Lesegerät aufweisen sowie einen Rechner, der das Verschieben der Fächer und die Entriegelung des Schalters steuert, sowie eine Anzeigevorrichtung, auf welcher je nach Code die zu öffnenden Schalter angezeigt werden.

4. Elektronisches Handelssystem nach einem der vorhergehenden Ansprüche, **dadurch gekennzeichnet, dass** es eine Vielzahl von Bereitstellungsvorrichtungen umfasst, und dadurch, dass das Mittel zur Edition von Etiketten zur Identifizierung der Lose ein und derselben Bestellung enthält, die für unterschiedliche Fächer ein und derselben Bereitstellungsvorrichtung bestimmt ist.

5. Elektronisches Handelssystem nach Anspruch 1, **dadurch gekennzeichnet** das besagter Anhänger zur Auslieferung von Artikeln mehrere Fächerreihen enthält, die längs ausgerichtet sind und jeweils mit einer zur Seitenwand des besagten Anhängers öffnenden Klappe verbunden sind, mindestens einen Kühlbereich und ein Code-Lesegerät, das mit einem Rechner, welcher den Vergleich des vom Benutzer vorgelegten Codes mit den vom Sammlungszentrum berechneten Coden eines Speichers sowie die Kennung des damit verbundenen Faches steuert, wobei der Rechner die Verschiebung der besagten Fächer und die Entriegelung des entsprechenden Faches steuert, und das Code-Lesegerät an der Rückseite des Anhängers durch eine Überdachung (111) geschützt ist.

6. Elektronisches Handelssystem nach dem vorhergehenden Anspruch, **dadurch gekennzeichnet, dass** besagter Anhänger zur Auslieferung von Artikeln mindestens einen Kühlbereich und einen Bereich mit Umgebungstemperatur enthält.

7. Elektronisches Handelssystem nach einem der beiden vorhergehenden Ansprüche, **dadurch gekennzeichnet, dass** besagter Anhänger zur Auslieferung von Artikeln eine autonome Energiequelle enthält.

## Claims

1. An e-commerce (electronic commerce) system comprising:
- an e-commerce platform for viewing items and preparing an order from a computer connected to the server of said platform via a computer network,
- at least a piece of equipment for making an order available, which consists of a mobile trailer for delivering items, comprising at least one enclosure provided with a wicket defining an access hatch which opens on the side wall of the trailer, controlled by a local computer and means for interacting with a code reader,
with said trailer comprising a plurality of mobile compartments adapted to be positioned opposite the access hatch of the wicket to enable the removal and/or the introduction of items from/into said compartment,
said system further comprising means for enabling the saving of a code corresponding to the compartment in which the items of an order are deposited, the secured transmission of said code to the user who placed said order as an electronic notification, and means for enabling said user to enter said code to activate the displacement of the compartment considered facing the access hatch and the opening thereof for removing the items corresponding to the order, with such means comprising a device for entering a code positioned at the rear of the trailer and sheltered by a canopy (111).

2. An e-commerce system according to claim 1, **characterized in that** said pieces of equipment for making an order available comprise at least two storage areas thermally regulated at different temperatures.

3. An e-commerce according to claim 1 or claim 2, **characterized in that** said pieces of equipment for making an order available comprise at least a code reader and a computer controlling the displacement of the compartments and the unlocking of the wicket, as well as a display system indicating the wickets to be opened, according to the code.

4. An e-commerce system according to any one of the preceding claims, **characterized in that** it comprises a plurality of pieces of equipment for making an order available and **in that** it comprises means for printing labels aiming at identifying the batches of the same order and intended for separate compartments of the same piece of equipment for making the order available.

5. An e-commerce system according to claim 1, **characterized in that** said trailer for delivering items comprises a plurality of longitudinally aligned rows of compartments, each communicating through a hatch which opens on the side wall of said trailer, at least one refrigerated area and a code reader associated with a computer controlling the comparison of the code entered by a user with a memory containing the codes computed by the cluster center, as well as the identifier of the associated compartment, with said computer controlling the displacement of said compartments and the unlocking of the corresponding one, with the code reader being sheltered by a canopy (111) at the rear of the trailer.

6. An e-commerce system according to the preceding claim, **characterized in that** said trailer for delivering items comprises at least one refrigerated area and one area at room temperature.

7. An e-commerce system according to one of the preceding two claims, **characterized in that** the trailer for delivering items comprises a self-contained power source.
